# EUROPEAN PATENT APPLICATION

(11) **EP 4 554 281 A1**
(43) Date of publication of application: **14.05.2025**
(21) Application number: 22950268.7
(22) Date of filing: 07.07.2022
(51) Int. Cl.: H04W 28/18, H04W 36/38, H04W 72/1263

(54) **TERMINAL, RADIO COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2022/027022
(87) International publication number: WO 2024/009474

(57) **Abstract**

A terminal according to one aspect of the present disclosure includes: a receiving section that receives downlink control information (DCI) including a field indicating a transmission configuration indication (TCI) state and a field indicating switch of a serving cell and receives a configuration of cell application timing; and a control section that applies the TCI state after switch at timing based on the configuration. According to one aspect of the present disclosure, it is possible to appropriately perform configuration related to cells.

## Description

### Technical Field

The present disclosure relates to a terminal, a radio communication method, and a base station in next-generation mobile communication systems.

### Background Art

In a Universal Mobile Telecommunications System (UMTS) network, the specifications of Long Term Evolution (LTE) have been drafted for the purpose of further increasing high speed data rates, providing lower latency and so on (Non-Patent Literature 1). In addition, for the purpose of further high capacity, advancement and the like of LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Technical Problem

It is studied that, in a radio communication system, one or a plurality of cells/transmission/reception points (TRPs) (multi-TRP (MTRP)) perform downlink (DL) transmission to a terminal (user terminal, User Equipment (UE)).

In a case of using multi-TRP, a serving cell may be switched to a cell having a different PCI from that of the serving cell (L1/L2 inter-cell mobility (layer1/layer2 inter-cell mobility)) by signaling in at least one of layer 1 and layer 2. However, in a case where L1/L2 inter-cell mobility is performed, a problem such as degrade of communication throughput may occur unless configuration related to cells is performed appropriately.

Thus, an object of the present disclosure is to provide a terminal, a radio communication method, and a base station that can appropriately perform configuration related to cells. Solution to Problem

A terminal according to one aspect of the present disclosure includes: a receiving section that receives downlink control information (DCI) including a field indicating a transmission configuration indication (TCI) state and a field indicating switch of a serving cell and receives a configuration of cell application timing; and a control section that applies the TCI state after switch at timing based on the configuration.

### Advantageous Effects of Invention

According to one aspect of the present disclosure, it is possible to appropriately perform configuration related to cells.

### Brief Description of Drawings

[FIG. 1] FIG. 1A shows an example of inter-cell mobility including a non-serving cell (for example, single-TRP inter-cell mobility). FIG. 1B shows an example of inter-cell mobility when multi-TRP are used.
[FIG. 2] FIG. 2 is a diagram to show an example of MAC entities/HARQ entities.
[FIG. 3] FIG. 3A to FIG. 3C are diagrams to show examples of a cell group configuration corresponding to FIG. 2.
[FIG. 4] FIG. 4 is a diagram to show an example of MAC entities.
[FIG. 5] FIG. 5 is a diagram to show an example of application timing of an indicated TCI state.
[FIG. 6] FIG. 6 is a diagram to show an example of option 1 of embodiment 1-1.
[FIG. 7] FIG. 7 is a diagram to show an example of option 2 of embodiment 1-1.
[FIG. 8] FIG. 8A and FIG. 8B are diagrams to show examples of serving cell switch in supplement D.
[FIG. 9] FIG. 9 is a diagram to show another example of the serving cell switch in supplement D.
[FIG. 10] FIG. 10 is a diagram to show an example of serving cell switch of variation 1.
[FIG. 11] FIG. 11 is a diagram to show an example of serving cell switch of variation 2.
[FIG. 12] FIG. 12 is a diagram to show an example of serving cell switch of variation 3.
[FIG. 13] FIG. 13 is a diagram to show an example of application timing of an indicated TCI state in option 1 of a second embodiment.
[FIG. 14] FIG. 14 is a diagram to show an example of a MAC CE of embodiment 3-2.
[FIG. 15] FIG. 15 is a diagram to show an example of a switching gap in a fifth embodiment.
[FIG. 16] FIG. 16 is a diagram to show an example of cell switch in embodiment 6-1.
[FIG. 17] FIG. 17 is a diagram to show an example of cell switch in embodiment 6-2.
[FIG. 18] FIG. 18 is a diagram to show an example of a schematic structure of a radio communication system according to one embodiment.
[FIG. 19] FIG. 19 is a diagram to show an example of a structure of a base station according to one embodiment.
[FIG. 20] FIG. 20 is a diagram to show an example of a structure of a user terminal according to one embodiment.
[FIG. 21] FIG. 21 is a diagram to show an example of a hardware structure of the base station and the user terminal according to one embodiment.
[FIG. 22] FIG. 22 is a diagram to show an example of a vehicle according to one embodiment.

### Description of Embodiments

### (Multi-TRP)

It is studied that one or a plurality of cells/transmission/reception points (TRPs) (multi-TRP (MTRP)) perform DL transmission to a UE. It is also studied that the UE performs UL transmission to the one or plurality of cells/TRPs. As a procedure of this case, scenario 1 or scenario 2 below is conceivable. Note that, in the present disclosure, a serving cell may be interpreted as a TRP in a serving cell. Layer1/layer2 (L1/L2) signaling and a Medium Access Control Control Element (MAC CE)/DCI may be interchangeably interpreted. In the present disclosure, a physical cell ID (Physical Cell Identity (PCI)) different from a PCI of a current serving cell is described simply as a "different PCI" in some cases. In scenario 1, the following procedure will be executed, for example.

### <Scenario 1>

Scenario 1 corresponds, for example, to multi-TRP inter-cell mobility but may be a scenario not corresponding to multi-TRP inter-cell mobility.
(1) A UE receives, from a serving cell, a configuration of an SSB for beam measurement for a TRP corresponding to a different PCI from that of the serving cell and a configuration necessary for use of a radio resource for data transmission/reception, the configuration including a resource of the different PCI.
(2) The UE carries out the beam measurement for the TRP corresponding to the different PCI and reports a beam measurement result to the serving cell.
(3) Based on the above reporting, a transmission configuration indication (TCI) state associated with the TRP corresponding to the different PCI is activated by L1/L2 signaling from the serving cell.
(4) The UE performs transmission/reception by using a UE-dedicated channel on the TRP corresponding to the different PCI.
(5) The UE needs to always cover the serving cell also in a case of multi-TRP. The UE, as existing systems, needs to use common channels (broadcast control channel (BCCH) and paging channel (PCH)) and the like from the serving cell.

In scenario 1, when the UE transmits/receives a signal with a non-serving cell/TRP (TRP corresponding to the PCI of the non-serving cell), the serving cell (assumption of the serving cell in the UE) is not changed. The UE is configured with a higher layer parameter related to the PCI of the non-serving cell, by the serving cell. Scenario 1 may be employed in Rel. 17, for example.

### <Scenario 2>

In scenario 2, L1/L2 inter-cell mobility is employed. In L1/L2 inter-cell mobility, serving cell change is possible by using a function such as beam control without performing RRC reconfiguration. In other words, transmission/reception with a non-serving cell is possible without performing handover. Since a data communication impossible period occurs due to the necessity of RRC reconfiguration for handover and the like, application of L1/L2 inter-cell mobility with no need of handover allows data communication to continue even at the time of serving cell change. Scenario 2 may be employed in Rel. 18, for example. In scenario 2, the following procedure will be executed, for example.
(1) For beam measurement/serving cell change, a UE receives, from a serving cell, a configuration of an SSB of a cell having a different PCI (non-serving cell).
(2) The UE carries out the beam measurement using the different PCI and reports a measurement result to the serving cell.
(3) The UE may receive the configuration of the cell having the different PCI (serving cell configuration) by higher layer signaling (for example, RRC). In other words, pre-configuration related to serving cell change may be performed. This configuration may be performed together with or separately from the configuration in (1).
(4) Based on the above reporting, the TCI state of the cell having the different PCI may be activated by L1/L2 signaling according to the serving cell change. The activation of the TCI state and the serving cell change may be performed separately.
(5) The UE changes the serving cell (serving cell assumption) and initiates reception/transmission by using a UE-dedicated channel configured in advance and the TCI state.

In other words, in scenario 2, a serving cell (serving cell assumption in the UE) is updated by L1/L2 signaling.

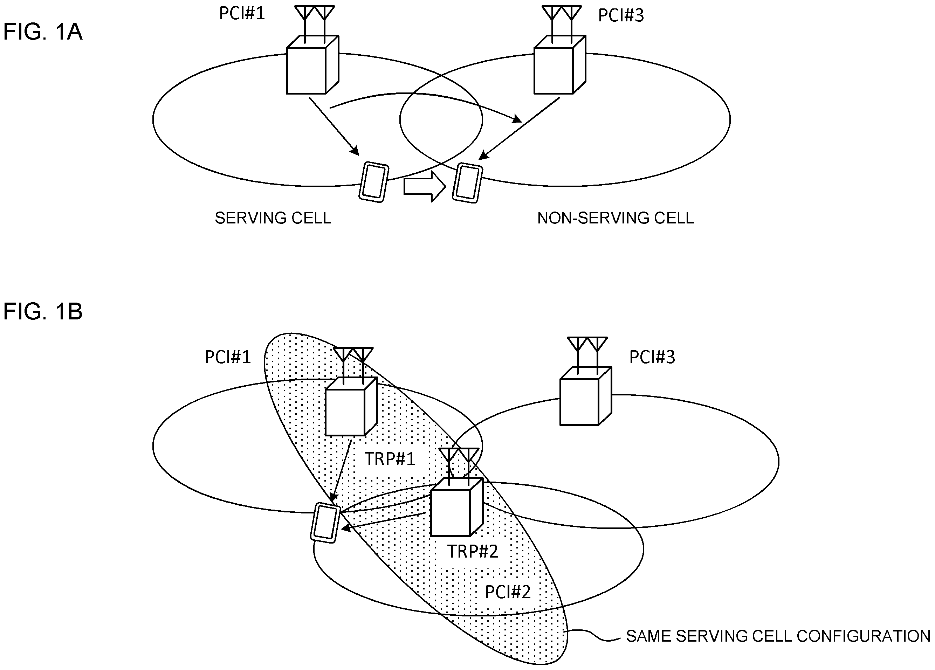

An example of a case where a UE receives channels/signals from a plurality of cells/TRPs in inter-cell mobility will be described by using FIGS. 1A and 1B.

FIG. 1A shows an example of inter-cell mobility including a non-serving cell (for example, single-TRP inter-cell mobility). Single-TRP may mean a case where only one TRP of multi-TRP performs transmission to a UE (which may be referred to as a single mode). FIG. 1A shows a case where a UE receives channels/signals from a base station/TRP of cell #1 (PCI #1) being a serving cell and a base station/TRP of cell #3 (PCI #3) not being a serving cell (non-serving cell).

For example, the serving cell of the UE switches from cell #1 to cell #3. In this case, a TCI state may be updated by DCI/MAC CE, and selection of a port (for example, an antenna port)/TRP/point may be performed dynamically. By using DCI/MAC CE, the UE can update a cell/beam at high speed.

FIG. 1B shows an example of inter-cell mobility when multi-TRP are used. FIG. 1B shows a case where a UE receives channels/signals from TRP #1 and TRP2. FIG. 1B shows a case where TRP #1 is present in cell #1 (PCI #1) and TRP #2 is present in cell #2 (PCI #2). Serving cell configurations of cell #1 (PCI #1) and cell #2 (PCI #2) are assumed to be the same.

Multi-TRP (TRPs #1 and #2) may be connected via ideal/non-ideal backhaul to exchange information, data, and the like. From each TRP of the multi-TRP, a different codeword (Code Word (CW)) and a different layer may be transmitted. As a mode of multi-TRP transmission, non-coherent joint transmission (NCJT) may be employed. In FIG. 1B, NCJT may be performed between a plurality of cells (cells with different PCIs).

In NCJT, for example, TRP #1 performs modulation mapping on a first codeword, performs layer mapping, and transmits a first signal/channel (for example, PDSCH) in layers of a first number (for example, two layers) by using first precoding. TRP #2 performs modulation mapping on a second codeword, performs layer mapping, and transmits a second signal/channel (for example, PDSCH) in layers of a second number (for example, two layers) by using second precoding.

A plurality of PDSCHs (multi-PDSCH) transmitted by NCJT may be defined to partially or entirely overlap in terms of at least one of the time and frequency domains. In other words, the first PDSCH from TRP #1 and the second PDSCH from TRP #2 may overlap in terms of at least one of the time and frequency resources.

The first PDSCH and the second PDSCH may be assumed not to be in a quasi-co-location (QCL) relationship (not to be quasi-co-located). Reception of the multi-PDSCH may be interpreted as simultaneous reception of PDSCHs of a QCL type other than a certain QCL type (for example, QCL type D).

A plurality of PDSCHs (which may be referred to as multi-PDSCH (multiple PDSCHs)) from the multi-TRP may be scheduled by using one piece of DCI (single DCI (S-DCI), single PDCCH) (single master mode). The one piece of DCI may be transmitted from one TRP of the multi-TRP. A configuration using one piece of DCI in multi-TRP may be referred to as single-DCI based multi-TRP (mTRP/MTRP).

A case of transmitting part of a control signal to a UE from each TRP of multi-TRP and transmitting data signals from the multi-TRP (which may be referred to as a master-slave mode) may be employed.

A plurality of PDSCHs from the multi-TRP may be individually scheduled by using a plurality of pieces of DCI (multi-DCI (M-DCI), multi-PDCCH (multiple PDCCHs)) (multi-master mode). The plurality of pieces of DCI may be transmitted from respective TRPs of the multi-TRP. A configuration using a plurality of pieces of DCI in multi-TRP may be referred to as multi-DCI based multi-TRP (mTRP/MTRP).

A UE may assume to transmit, to different TRPs, separate CSI reports related to the respective TRPs. Such CSI feedback may be referred to as separate feedback, separate CSI feedback, and the like. In the present disclosure, "separate" may be interchangeably interpreted as "independent."

### (L1/L2 Inter-cell Mobility)

### {Configuration of Candidate Serving Cells}

An example of L1/L2 inter-cell mobility will be described. In a case of performing communication with one TRP (case of using a single TRP), L1/L2 inter-cell mobility of a UE may be configured only for a plurality of cells having approximately the same serving cell configurations.

In a case of performing communication with one TRP (case of using a single TRP), a UE may receive a configuration of a plurality of candidate serving cells being non-serving cells corresponding to frequencies, by higher layer signaling (RRC reconfiguration signaling) in advance. Then, when the UE has received an indication indicating any of the plurality of candidate serving cells by a MAC CE/DCI, the UE may change (may hand over) a serving cell to the candidate serving cell indicated by the indication.

The UE may receive (may be configured with) a configuration of a plurality of candidate serving cells being non-serving cells corresponding frequencies, by higher layer signaling (RRC reconfiguration signaling). Then, when the UE receives information related to QCL (QCL/TCI) of a non-serving cell by a MAC CE/DCI, the UE may change a serving cell (hand over) to a candidate serving cell corresponding to (related to) the non-serving cell and apply the QCL.

When the UE is configured with a plurality of candidate serving cell configurations corresponding to frequencies, the UE may simultaneously apply/maintain/support/hold at least two (a plurality) of candidate serving cell configurations of the plurality of candidate serving cell configurations. The UE may simultaneously perform communication for a plurality of serving cells corresponding to the plurality of respective candidate serving cell configurations.

### <Example of MAC Entities/HARQ Entities>

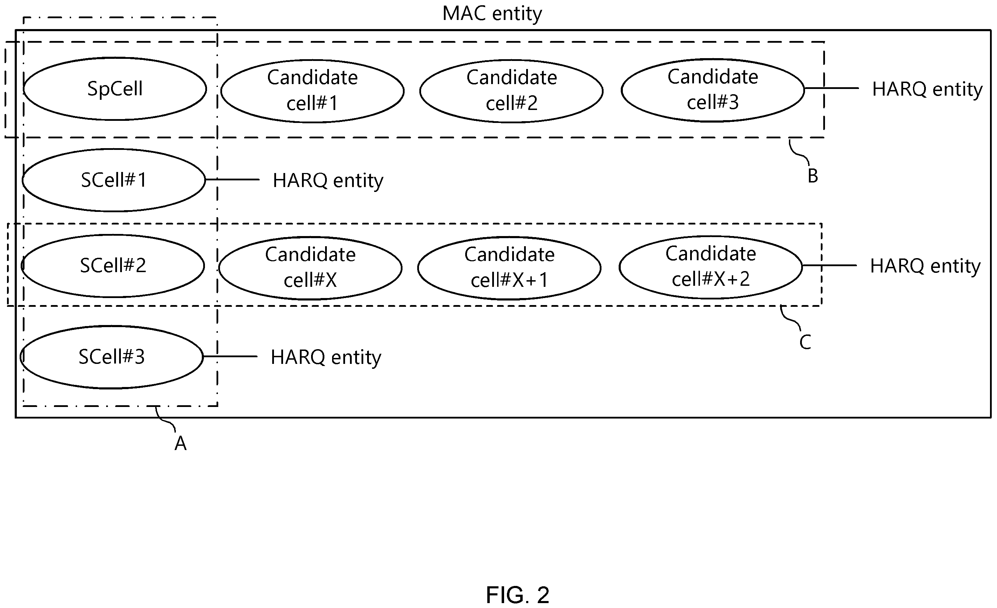

FIG. 2 is a diagram to show an example of MAC entities/HARQ entities. Cells in a frame indicated with A in FIG. 2 are cells of a cell group (MCG/SCG) for CA/DC operation. Each cell corresponds to a different frequency. Cells in a frame indicated with B in FIG. 2 are cells of a cell group for L1/L2 inter-cell mobility operation and show an example of a case where a serving cell is an SpCell. The cells in B correspond to the same frequency. Cells in a frame indicated with C in FIG. 2 are cells of a cell group for L1/L2 inter-cell mobility operation and show an example of a case where a serving cell is an SCell. The cells in C corresponds to the same frequency.

In other words, in CA/DC, each cell corresponds to a different frequency (CC), but in L1/L2 inter-cell mobility (multi-TRP), the cells (cells having different PCIs) correspond to the same frequency (CC). Candidate cell #X in C may be different from candidate cell #1 in B (may have a different PCI/frequency). X may denote a regenerated index in a certain frequency, and may start from 1, for example. The regenerated index may be an index corresponding to at least part of a PCI and created for a candidate cell.

In another example, even in a case of L1/L2 inter-cell mobility, cells (SpCell/Scell, candidate cells) may correspond to different frequencies. Note that the cells may share the same HARQ entity corresponding to PDSCH scheduling.

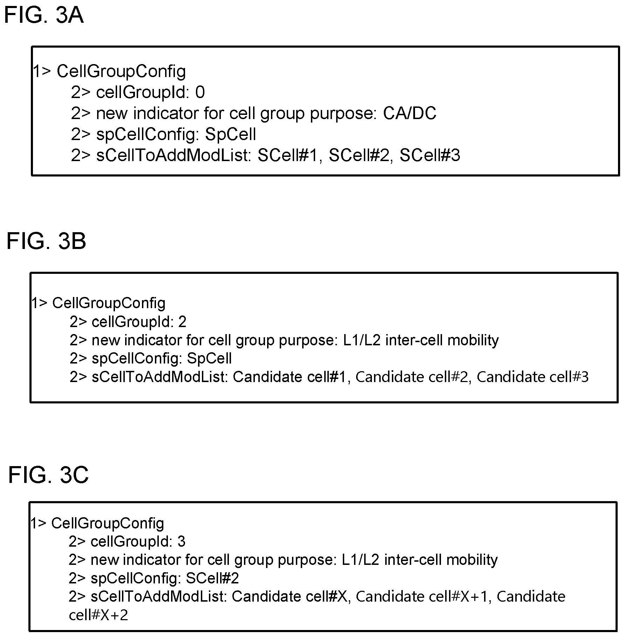

FIG. 3A to FIG. 3C are diagrams to show examples of a cell group configuration corresponding to FIG. 2. FIG. 3A to FIG. 3C correspond to cells in the respective frames, A, B, and C, (cell groups) in FIG. 2. "cellGroupId," "new indicator for cell group purpose," "spCellConfig," and "sCellToAddModList" correspond to cells in the respective frames, A, B, and C, (cell groups) in FIG. 2.

As described above, by reusing a CA/DC framework for L1/L2 inter-cell mobility, cell group configuration related to L1/L2 inter-cell mobility can be performed without adding any new RRC information element.

### <Serving Cell Change Indication>

Implicit or explicit signaling for serving cell change indication will be described.

### {Implicit Signaling}

Implicit signaling for serving cell change indication will be described. In this case, scenario 2 in multi-TRP described above may be employed, for example.

### {{Option 1}}

When a specific control resource set (CORESET) (for example, at least one of CORESET #0, a CORESET of CH5 Type0-CSS, a CORESET of CH6/CH7/CH8 CSS) is indicated (activated) by a MAC CE together with one or more TCI states associated with a cell having a PCI different from the PCI of a serving cell (when the one or more TCI states associated with the cell having the PCI different form the PCI of the serving cell is indicated/activated for the specific CORESET by the MAC CE), a UE may judge to change the serving cell to another cell (cell x, cell having a different PCI). In other words, this activation may implicitly indicate that the serving cell is changed to another cell.

### {{Option 2}}

When a MAC CE activates/deactivate TCI states of a PDSCH and all the TCI states activated by the MAC CE are associated with same cell x having a different PCI from the PCI of the serving cell, the UE may judge to change the serving cell to another cell (cell x). In other words, this association may implicitly indicate that the serving cell is changed to another cell.

### {Explicit Signaling}

Explicit signaling for serving cell change indication will be described. In this case, scenario 2 in multi-TRP described above may be employed, for example.

### {{Option 3}}

An example of the serving cell change indication will be described below. Note that activation/deactivation of a non-serving cell, change of a serving cell, transmission/reception with another cell (non-serving cell) having a different physical cell ID from a physical cell ID of a serving cell may be interchangeably interpreted.

A UE may receive a new MAC CE including at least one of fields (information) indicating (1) to (3) below corresponding to a non-serving cell to be used for activation/deactivation of the non-serving cell. When the UE has received the MAC CE, the UE may judge to change a serving cell to another cell (non-serving cell). The UE may control transmission/reception of a DL signal/UL signal with the non-serving cell, based on the information Note that the non-serving cell may be one or may be more than one. In the example shown below, a MAC CE including a plurality of fields indicating a plurality of non-serving cell indices is used.
(1) Serving cell ID
(2) BWP ID
(3) Non-serving cell ID to be used for activation The non-serving cell ID may be replaced with any information corresponding to the non-serving cell (possible to identify the non-serving cell).

As an example of (3), any of (3-1) to (3-5) may be employed, for example.
(3-1) PCI (PCI to be used directly) For example, 10 bits are used.
(3-2) Regenerated index (new ID) of the non-serving cell The new ID may be associated with part of the PCI, and may be configured only for a serving cell and a non-serving cell to be used (possible to be used) by the UE. The new ID can reduce the number of bits compared to a PCI can.
(3-3) CSI report configuration ID (CSI-ReportConfigId) (when CSI-ReportConfig corresponds to one or a plurality of non-serving cells)
(3-4) CSI resource configuration ID (CSI-ResourceConfigId) (when CSI-ResourceConfigId corresponds to one or a plurality of non-serving cells)
(3-5) Bitmap indicating activation/deactivation of each non-serving cell The size (number of bits) of the bitmap may be the same as the number of non-serving cells configured on this CC. For example, when the second non-serving cell is to be activated among three non-serving cells, "010" is configured.

### {{Option 4}}

The UE may receive a MAC CE to which a new 1-bit field "C" is added to an existing MAC CE. The field indicates whether to change a serving cell. The UE may receive the MAC CE, and may judge to change the serving cell to another cell, based on the field.

For example, at least one of a field indicating activation/deactivation of a TCI state of a PDSCH, a field indicating activation/deactivation of a cell having a different PCI, a field indicating an RS (for example, an SSB) for beam measurement/report for a cell having a different PCI, and a field indicating another purpose/function may be added to an existing MAC CE. In this case, the number of cells associated with a different PCI/indicated in the MAC CE may be only one.

### {{Option 5}}

A field indicating a serving cell index/PCI/another ID (new ID of option 3 above or the like) or a field of a TCI state/SSB/CSI-RS of a target cell (serving cell after change) may further be included in the MAC CE in option 4.

Options 3 to 5 may be combined. In other words, a MAC CE including at least one of the fields indicated in options 3 to 5 may be used.

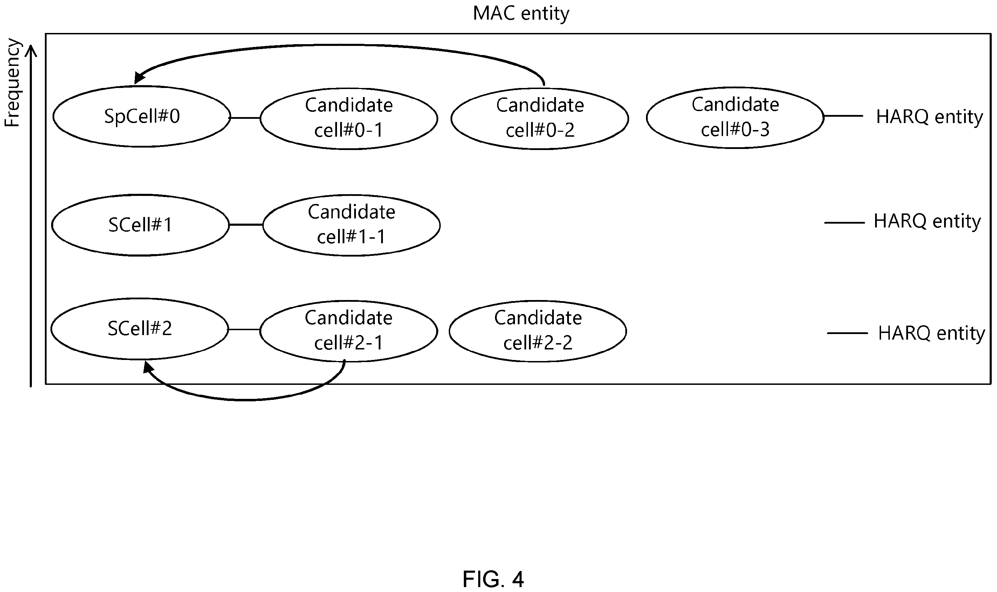

FIG. 4 is a diagram to show an example of MAC entities. For example, when it is indicated in serving cell SpCell #0 of an MCG/SCG that the serving cell is changed to candidate cell #0-2, by L1/L2 signaling, candidate cell #0-2 turns to be new serving cell SpCell #0. For example, when it is indicated in serving cell SCell #2 of the MCG/SCG that the serving cell is changed to candidate cell #2-1, by L1/L2 signaling, candidate cell #2-1 turns to be new serving cell SCell #2.

### (DCI Based TCI State Indication for Unified TCI)

DCI based TCI state indication for unified TCI of Rel. 17 will be described. A UE receives indication by a TCI state field (3 bits at maximum) of DCI format 1_1/1_2 (with or without DL assignment) and applies (switches) a TCI state according to the indication. Note that one TCI codepoint in DCI may be associated with one "joint TCI" or at least one of "DL TCI" and "UL TCI."

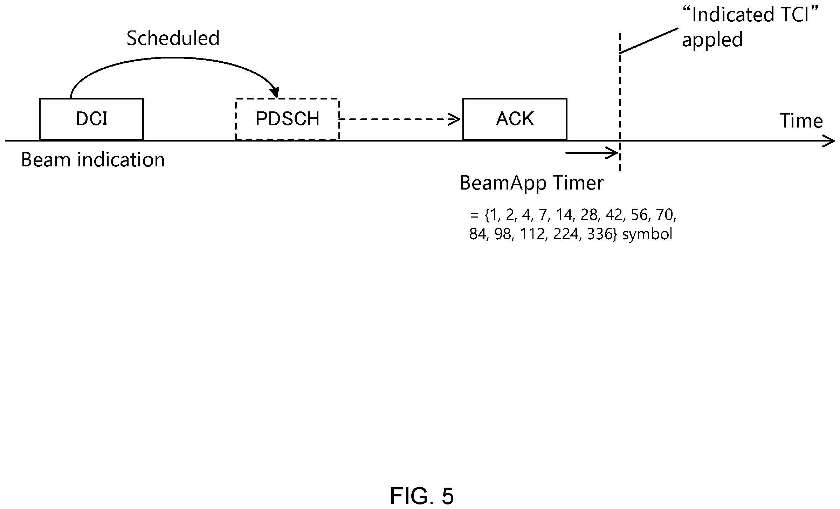

FIG. 5 is a diagram to show an example of application timing of an indicated TCI state. A UE receives DCI and receives a PDSCH scheduled by the DCI. Then, the UE transmits ACK for the PDSCH. A time period indicated by beam application timing/timer (BAT) after the transmission timing of the ACK, an indicated TCI state is applied. BeamAppTime_r17 may be configured for the UE by RRC signaling, based on UE capability.

### (Analysis)

As described above, in a case of using multi-TRP, a serving cell may be switched to a cell having a different PCI from that of the serving cell (L1/L2 inter-cell mobility (layer1/layer2 inter-cell mobility)) by signaling in at least one of layer 1 and layer 2. However, in a case where L1/L2 inter-cell mobility is performed, a problem such as degrade of communication throughput may occur unless configuration related to cells is performed appropriately.

Thus, the inventors of the present invention came up with the idea of a terminal, a radio communication method, and a base station that can appropriately perform configuration related to cells.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, "activate," "deactivate," "indicate," "select," "configure," "update," "determine," and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

A spatial relation information Identifier (ID) (TCI state ID) and spatial relation information (TCI state) may be interchangeably interpreted. "Spatial relation information" may be interchangeably interpreted as "a set of spatial relation information," "one or a plurality of pieces of spatial relation information," and the like. The TCI state and the TCI may be interchangeably interpreted.

In the present disclosure, "drop," "suspend," "cancel," "puncture," "rate-match," "postpone," "do not transmit," and the like may be interchangeably interpreted.

In the present disclosure, applying an indicated TCI state may mean that at least one of a UE and a base station applies an indicated TCI state. Applying an indicated TCI state, switching a TCI state, and switching a cell (serving cell) may be interchangeably interpreted. In the present disclosure, switch of a cell (cell switch) may mean switch of a serving cell.

In the present disclosure, a cell group, a serving cell group, a master cell group (MCG), and a secondary cell group (SCG) may be interchangeably interpreted. L1/L2, L1/L2 signaling, and a MAC CE/DCI may be interchangeably interpreted. A serving cell may be replaced with a cell from which a PDSCH is transmitted. A candidate cell may mean a cell being a candidate for a serving cell by L1/L2 inter-cell mobility.

In the present disclosure, a cell, a serving cell, a source serving cell, a CC, a BWP, a BWP in a CC, and a band may be interchangeably interpreted. In the present disclosure, another cell, a non-serving cell, a cell having a different PCI, a candidate serving cell, a cell having a different PCI from a PCI of a current serving cell, another serving cell, and a target cell may be interchangeably interpreted. In the present disclosure, switch, change, and update may be interchangeably interpreted.

### (Radio Communication Method)

### <First Embodiment>

A UE may receive DCI including a field indicating cell switch (switch/switching/change/update of a serving cell) and switch a cell in which transmission/reception is performed, based on the DCI. In the present embodiment, indication by DCI will be described. However, cell switch may be indicated by DCI/MAC CE (for example, employ a third embodiment to be described later).

### {Embodiment 1-1}

A field indicating cell switch (switch of a serving cell) of the DCI may be an explicit field of 1 bit (or a plurality of bits) for cell switch. In a case of a plurality of bits, both indication of cell switch and a cell number (ID of a source serving cell/target cell) of a cell switch destination may be notified. When an "existing DCI field" and an "RNTI with which DCI is to be CRC-scrambled" are certain values, a UE may judge that cell switch is indicated, without using any explicit bit field for cell switch. In the present disclosure, a source serving cell is a serving cell before cell switch, and a target cell is a serving cell after the cell switch.

### <<Option 1>>

A source serving cell is a cell in which DCI is received/detected (cell corresponding to a BWP/CC in which DCI is received/detected). In other words, the source serving cell is implicitly indicated by reception of DCI. A target cell to be switched to is a cell related to a "TCI state indicated by the DCI" (cell having a related PCI). In other words, the target cell is implicitly indicated by the TCI state. The target cell is associated with the source serving cell and included in configured candidate serving cells. Option 1 may be employed for a case of self-scheduling. By performing implicit indication, the data amount of the DCI can be suppressed.

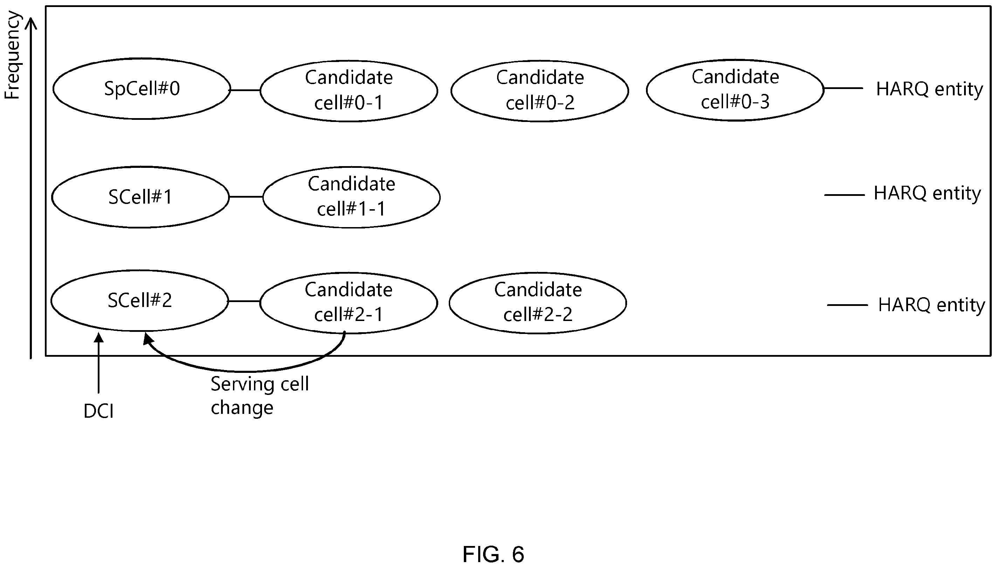

FIG. 6 is a diagram to show an example of option 1 of embodiment 1-1. A UE receives DCI indicating a field (for example, 1 bit) indicating serving cell switch in SCell #2 (source serving cell). Then, the serving cell is switched from SCell #2 to candidate cell #2-1 (target cell) related to a TCI state indicated by this DCI. In other words, candidate cell #2-1 turns to be a new serving cell.

### <<Option 2>>

A source serving cell is a cell indicated by a carrier indicator field of DCI. In other words, the source serving cell is explicitly indicated by the DCI. A target cell to be switched to is a cell related to a "TCI state indicated by the DCI" (cell having a related PCI). In other words, the target cell is implicitly indicated by the TCI state. The target cell is associated with the source serving cell and included in configured candidate serving cells. Option 2 may be employed for a case of cross-carrier scheduling. By performing implicit indication for the target cell, the data amount of the DCI can be suppressed.

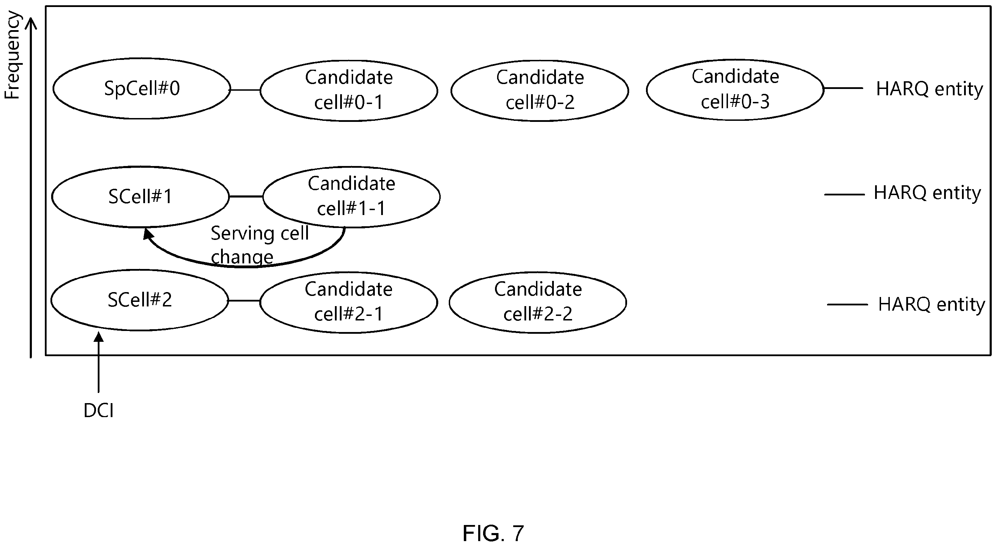

FIG. 7 is a diagram to show an example of option 2 of embodiment 1-1. A UE receives DCI indicating a carrier indicator in SCell #2. Assume that the carrier indicator indicates SCell #1 (source serving cell). Then, the serving cell is switched from SCell #1 to candidate cell #1-1 (target cell) related to a TCI state indicated by this DCI. In other words, candidate cell #1-1 turns to be a new serving cell.

### {Embodiment 1-2}

A UE may receive DCI including a new field indicating a source serving cell ID (or a cell group ID including a source serving cell) and a new field indicating a target cell ID, and switch the serving cell from the source serving cell to a target serving cell, based on the DCI. In other words, the source serving cell and the target cell are explicitly indicated by the DCI.

Embodiment 1-1 and embodiment 1-2 may be combined. For example, DCI may include a new field indicating a source serving cell ID (explicit indication), and a target cell may be a candidate cell related to a TCI state (implicit indication). For example, the source serving cell may be a cell in which DCI is received or a cell indicated by a carrier indicator (implicit indication), and the DCI may include a new field indicating a target cell ID (explicit indication).

In embodiment 1-2, information of 1 bit (or a plurality of bits) indicating serving cell switch may be included but need not be included. For example, when DCI does not include the information of 1 bit and includes a new field indicating a source serving cell ID and a new field indicating a target cell ID, the UE may determine to perform serving cell switch.

### {Supplement A}

When a new bit of DCI indicates switch of a serving cell, option 1 or 2 below may be employed for a restriction between an indicated source serving cell and a target cell indicated for the switch.

### <<Option 1>>

A UE does not expect that the indicated source serving cell and the indicated target cell for the switch are the same.

### <<Option 2>>

There may be no restriction. In other words, the source serving cell and the target cell may be the same. For example, when the indicated source serving cell and the indicated target cell for the switch are the same, the UE need not execute a cell switch procedure (may ignore switch indication). Alternatively, when the indicated source serving cell and the target cell indicated for switch are the same, the UE may execute a specific cell switch procedure. In this case, a specific UE operation to be performed for the cell switch (for example, a fifth embodiment) may be present.

### {Supplement B}

For the restriction of indication of switch of an SpCell in option 2 of embodiment 1-1, option 1 or 2 below may be employed.

### <<Option 1>>

A UE may be capable of receiving DCI indicating SpCell switch, from any serving cell.

### <<Option 2>>

A UE may be capable of receiving DCI indicating SpCell switch, only from an SpCell. In other words, DCI indicating serving cell change on an Scell can only indicate Scell change and cannot indicate SpCell change.

### {Supplement C}

For a DCI format for new indication to be used for serving cell switch, option 1 or 2 below may be employed.

### <<Option 1>>

DCI format 1_1/1_2 (with or without data assignment) may be used. In a case of DCI format 1_1/1_2 without data assignment, an existing DCI format for Rel-17 unified TCI state indication may be reused, and a new field for serving cell switch indication may be added.

### <<Option 2>>

DCI format 1_1/1_2 and 0_1/0_2 may be used. A UL DCI format may also be used for indication of serving cell switch.

### {Supplement D}

Switch of a plurality of serving cells may be possible to be indicated simultaneously. For example, a UE may simultaneously receive configurations/indications of serving cell switch for serving cells in one or more cell lists. For example, when serving cell switch from certain serving cell #x to candidate cell #x_i related to serving cell #x is indicated, another serving cell(s) (for example, cell #y) in the same cell list may also be configured/indicated to be switched to candidate cell #y_i related to serving cell #y. Note that there may be a restriction that all the serving cells in a cell list are configured with the same number of candidate cells for cell switch.

For example, when a source/target cell is included in a CC list (existing CC list (simultaneousTCI-UpdateList1-r17 or the like) or a new list), serving cells of all the BWPs/CCs (PCIs) in the CC list may be switched.

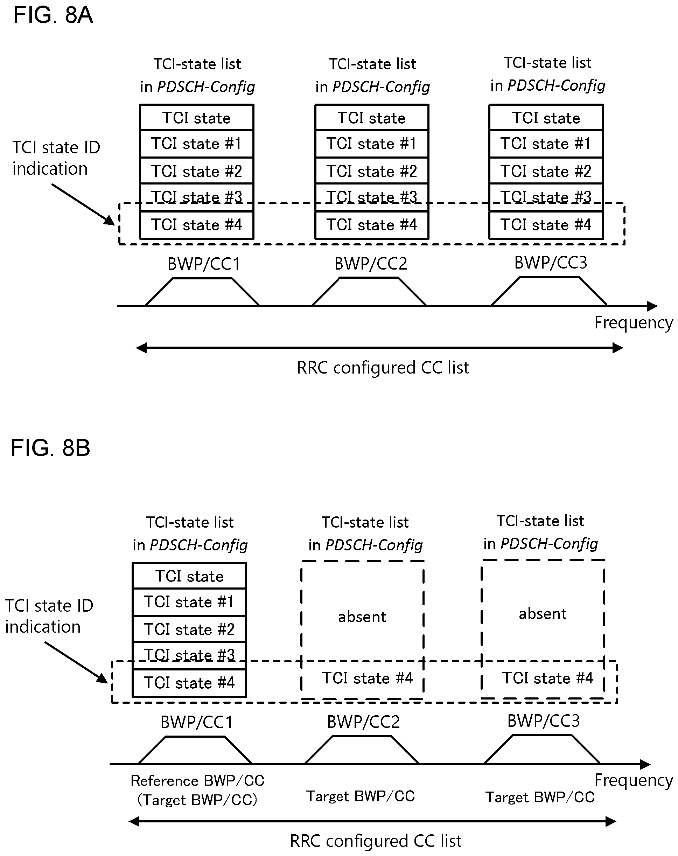

FIG. 8A and FIG. 8B are diagrams to show examples of serving cell switch in supplement D. In FIG. 8A, when TCI state #4 is indicated by DCI in TCI-state list in PDSCH-Config, a serving cell is switched to a candidate cell related to TCI state #4. In this case, serving cells are switched to a candidate cell related to TCI state #4 for all the cells in the same cell list (CC list). As shown in FIG. 8B, even when TCI-state list in PDSCH-Config is absent, each serving cell may similarly be switched to a candidate cell related to TCI state #4.

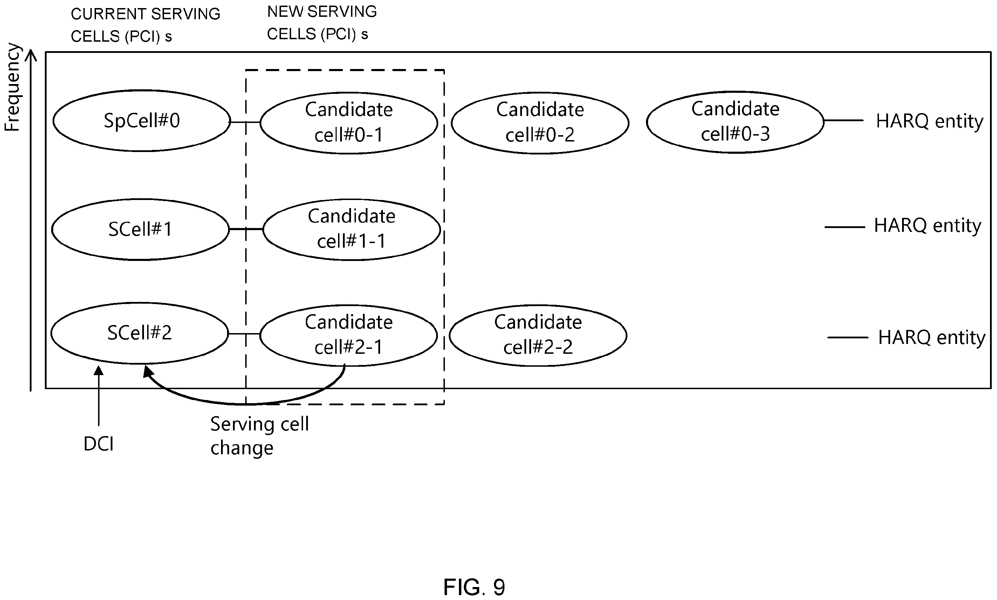

FIG. 9 is a diagram to show another example of the serving cell switch in supplement D. FIG. 9 shows an example of supplement D combined with option 1 of embodiment 1-1. SpCell #0, SCell #1, SCell #2, and candidate cells #0-1, #1-1, and #2-1 are assumed to be in the same cell list. A UE receives DCI indicating a field indicating serving cell switch in SCell #2 (source serving cell). In this case, the serving cell is switched from SpCell #0, SCell #1, and SCell #2 to candidate cells #0-1, #1-1, and #2-1 (target cells) related to a TCI state indicated by this DCI. Note that, also for option 2 of embodiment 1-1, supplement D may similarly be combined.

In the example in supplement D, explicit indication indicating serving cell switching by DCI/MAC CE may be employed. For example, embodiment 1-1 or 1-2 may be applied to indication of switch.

According to supplement D, switch for a plurality of serving cells can be performed simultaneously, which enables efficient cell switch processing.

According to the first embodiment, configuration/indication for switching a serving cell(s) can be made clear, and hence a serving cell(s) can be switched appropriately.

### <Variations>

After switch of a serving cell of an Scell (for example, cell #2-1) is indicated by L1/L2 signaling, the cell (cell #2-1) to be a serving cell may turn to be an SpCell, and an existing SpCell (before switch) (or #0-1) may turn to be a secondary cell (Scell). Note that the SpCell means a special cell (including a primary cell (PCell) and a primary secondary cell (PSCell)).

### {Variation 1}

RRC/MAC CE can configure global candidate cell IDs (cells #0-1, #0-1, ..., 2-2) for each cell group, band, FR, or UE. A UE may be indicated with switch of a serving cell by the global candidate cell IDs.

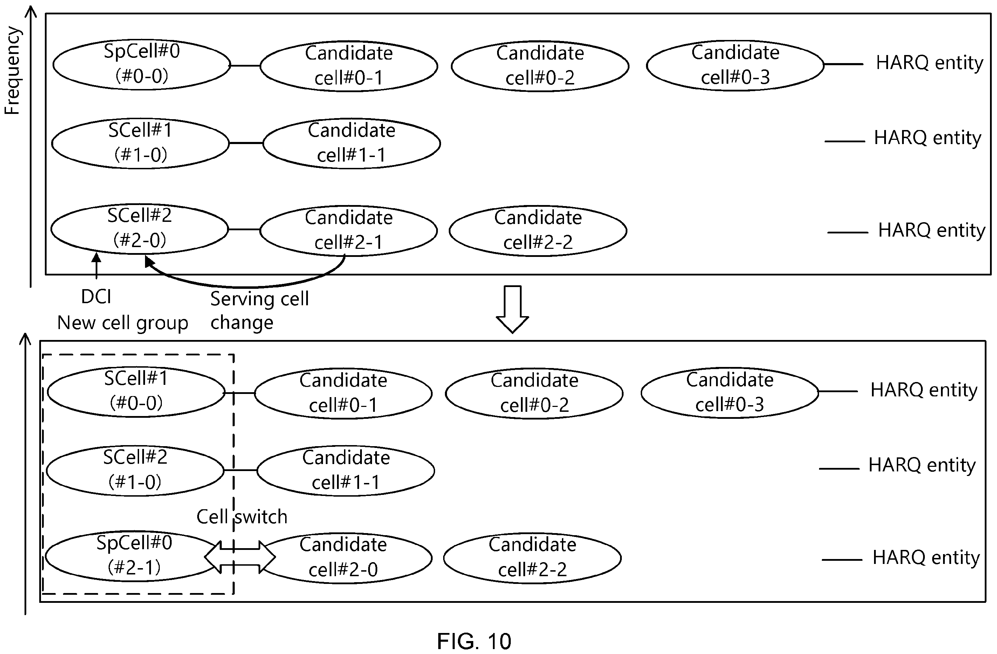

FIG. 10 is a diagram to show an example of serving cell switch of variation 1. A UE receives indication of change of a serving cell (cell #2-0 to cell #2-1) by a MAC CE/DCI. For this indication, the indication of option 1 or 2 of embodiment 1-1 may be used (only switch in the same frequency band is performed). Then, indicated cell #2-1 turns to be an SpCell of a new cell group. For cells other than the SpCell, option 1 or 2 below is employed.

### <<Option 1>>

In the order of global candidate cell IDs, cell #0-0 turns to be Scell #1, and cell #1-0 turns to be Scell #2 (example in FIG. 10).

### <<Option 2>>

Cell #1-0 turns to be Scell #1 (no change), and cell #0-0 (previous SpCell) turns to be Scell #2. In other words, such control as to reduce change is performed.

### {Variation 2}

RRC/MAC CE can configure global candidate cell IDs (cells #0-1, #0-1, ..., 2-2) for each cell group, band, FR, or UE. A UE may be indicated with switch of a serving cell by the global candidate cell IDs.

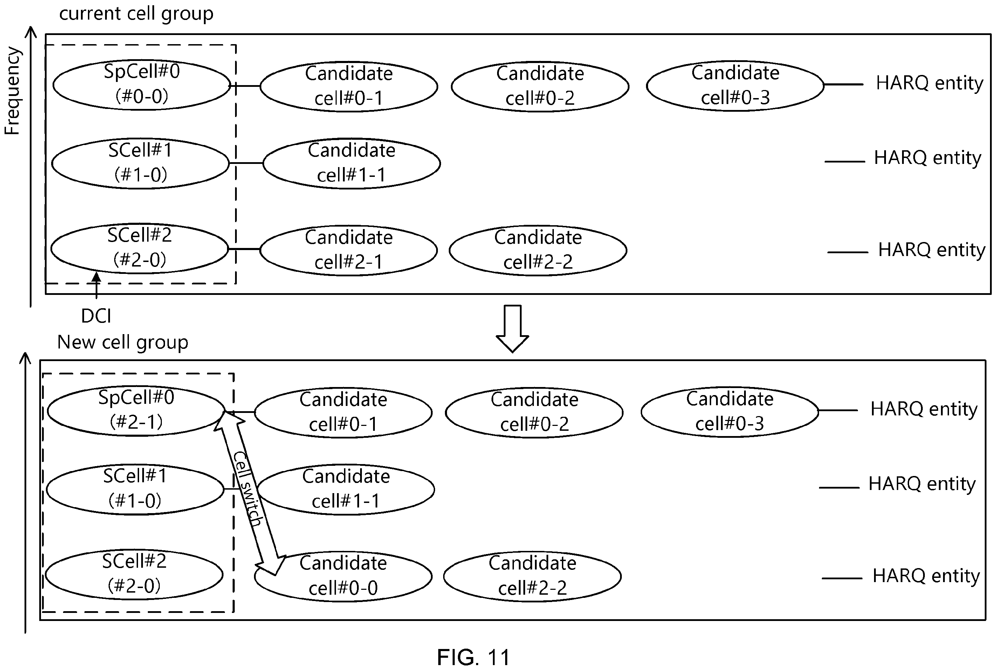

FIG. 11 is a diagram to show an example of serving cell switch of variation 2. A UE receives indication of change of a serving cell (cell #0-0 to cell #2-1) by a MAC CE/DCI. For this indication, the indication of option 1 or 2 of embodiment 1-1 may be used (switch in the same frequency band and switch in different frequency bands are performed). Then, indicated cell #2-1 turns to be an SpCell of a new cell group. For cells other than the SpCell, Cell #1-0 turns to be SCell #1, and Cell #2-0 turns to be SCell #2.

### {Variation 3}

RRC/MAC CE can configure candidate cell group IDs (#0, #1, #2, and #3) for each cell group, band, FR, or UE. A UE may be indicated with switch of a serving cell by the candidate cell group IDs.

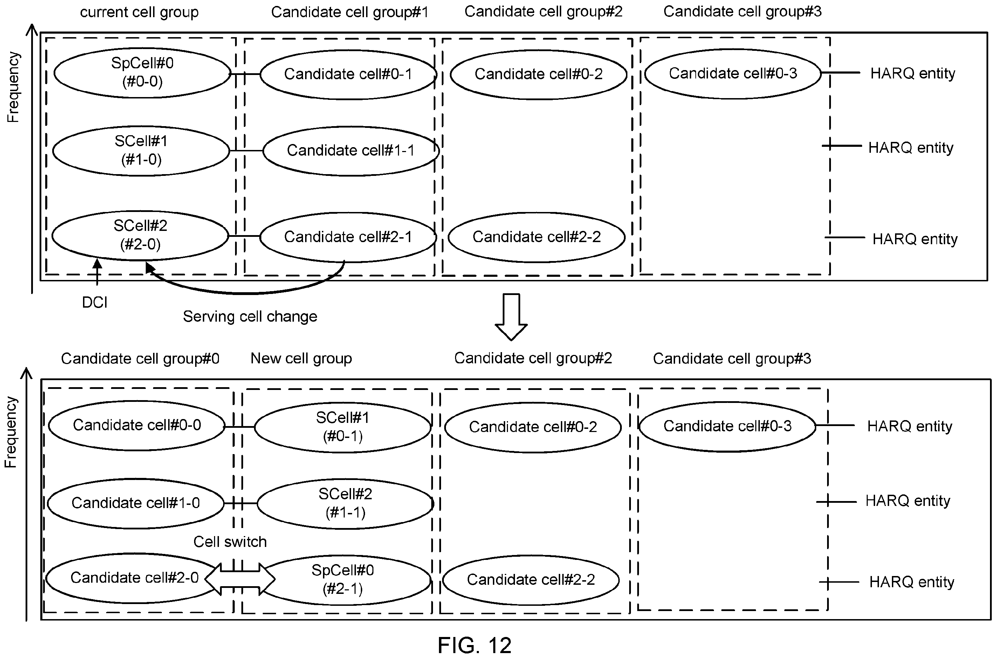

FIG. 12 is a diagram to show an example of serving cell switch of variation 3. A UE receives indication of change of a serving cell (cell group #0 to candidate cell group #1) by a MAC CE/DCI. For this indication, the indication of option 1 or 2 of embodiment 1-1 (and a sixth embodiment to be described later) may be used (switch in the same frequency band is performed).

Then, indicated candidate cell group #1 turns to be a new serving cell group. Cell #2-1 turns to be Spcell #0. Cell #0-1 turns to be Scell #1. Cell #1-1 turns to be Scell #2.

According to the above variations, a special cell can be switched to a cell in a different frequency band at time of switch of a serving cell.

### <Second Embodiment>

A UE receives downlink control information (DCI) including a field indicating a TCI state and a field indicating switch of a serving cell, receives a configuration of cell application timing (CAT) by higher layer signaling or the like, and applies the TCI state/serving cell (target cell) after switch at timing based on the configuration/indication. For the indication of DCI and the switch of a serving cell, the processing of the first embodiment may be performed.

### {Option 1}

The UE transmits UE capability information related to cell application timing, receives a parameter indicating cell application timing (for example, CellAppTime_r18) corresponding to the UE capability, by higher layer signaling (for example, RRC), and determines application timing of the cell/TCI state, based on the parameter. In this option, application of a case where a parameter indicating beam application timing (Beam application timing (BAT)) is received by higher layer signaling (for example, RRC) will be described.

### <<Option 1-1>>

When a parameter indicating cell application timing is configured, the UE may ignore a parameter indicating beam application timing (for example, BeamAppTime_r17) (if configured). Note that CAT ≥ BAT holds normally. Hence, the UE performs cell switch first and applies an indicated TCI state to a target cell.

### <<Option 1-2>>

The UE determines application timing of a TCI state, based on the maximum value of cell application timing and beam application timing (for example, max{CellAppTime_r18, BeamAppTime_r17}) and applies the maximum value to cell switch and beam switch. For example, in a case of CAT < BAT, the UE needs to consider the maximum time required for the cell switch and the beam switch.

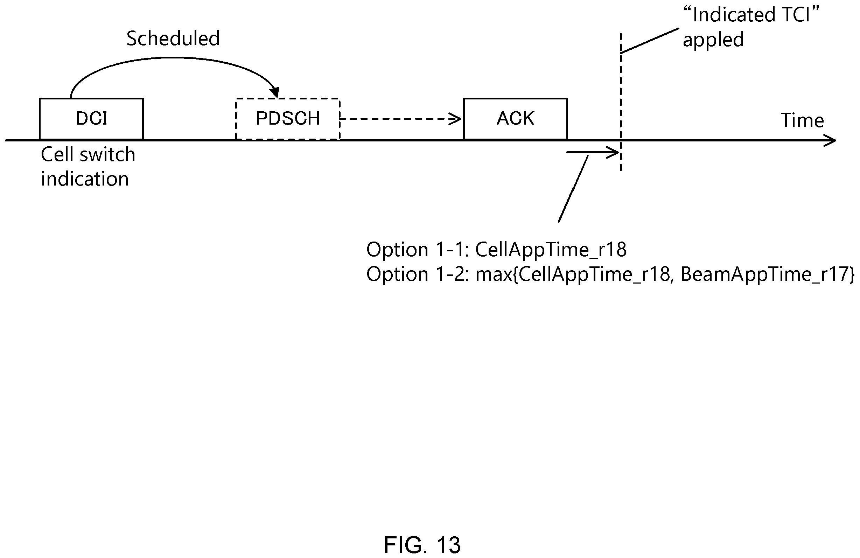

FIG. 13 is a diagram to show an example of application timing of an indicated TCI state in option 1 of the second embodiment. A UE receives DCI and receives a PDSCH scheduled by the DCI. Then, the UE transmits ACK for the PDSCH.

When option 1-1 is employed, the UE applies the indicated TCI state a time period indicated by a parameter indicating beam application timing (BeamAppTime_r17) after the transmission timing of the ACK. When option 1-2 is employed, the UE applies the indicated TCI state a time period indicated by the maximum value of the cell application timing and the beam application timing (for example, max{CellAppTime_r18, BeamAppTime_r17}) after the transmission timing of the ACK.

### {Option 2}

The UE may receive DCI including a field indicating cell application timing and determine application timing of a TCI state/serving cell, based on the indication. The cell application timing of the DCI may be included in a parameter (CellAppTime_r18) configured by higher layer signaling (for example, RRC) and may be based on capability of the UE.

### <<Option 2-1>>

When cell application timing is indicated by DCI, the UE may ignore a parameter indicating beam application timing (for example, BeamAppTime_r17) (if configured).

### <<Option 2-2>>

The UE applies the maximum value of cell application timing and beam application timing indicated by DCI (for example, max{CAT, BeamAppTime_r17 indicated by DCI}) to cell switch and beam switch.

### <<Variations>>

CATs may be configured separately for an SpCell and a plurality of SCells. Alternatively, different CATs may be applied at one time for single-cell switch and multi-cell switch. Note that SpCell switch may require a longer time than that of Scell switch. Multi-cell switch may require a longer time than that of single-cell switch.

The UE applies indicated TCI after switch of a serving cell. For a DL/UL channel/RS according to the indicated TCI, a Rel-17 rule may be reused. For other channels/RSs not conforming to the indicated TCI, a pre-configuration by RRC by a plurality of candidate cells may be used.

### <Third Embodiment>

The UE may receive a Medium Access Control Control Element (MAC CE) including at least one of an ID of a serving cell after switch, a TCI state related to the cell, and an ID of a serving cell before switch, and carries out cell switch, based on information included in the MAC CE.

Indication of DCI (for example, the first/second embodiment) and indication of a MAC CE may be employed in combination. For example, when the UE has received a MAC CE (including a source serving cell ID, a target cell ID, a TCI state, and the like) according to the present embodiment and has further received cell switch indication by DCI, the UE may carry out cell switch according to information of the MAC CE.

### {Embodiment 3-1}

As a new MAC CE for indication of cell switching and a possible field in a MAC CE, the following items may be used. A MAC CE of the present embodiment may further include at least one field of those described in <Serving Cell Change Indication> above, for example.
- Target cell ID (ID of a serving cell after switch).
- TCI state/SSB/CSI-RS related to a target cell These are used for the UE to know a DL beam or both of DL/UL beams on the target cell.
- UL beam/TCI state/spatial relation/SSB/CSI-RS/SRS of the target cell These are used for the UE to recognize a UL beam on the target cell.
- source serving cell ID (ID of a serving cell before switch) or ID of a cell group including a source serving cell (ID of a cell group including the serving cell before switch)
- CAT (for example, included in CellAppTime_r18 configured by RRC)

### {Embodiment 3-2}

The UE may be indicated with switching of a plurality of serving cells, based on one MAC CE. For example, a plurality of sets of fields as those in embodiment 3-1 are present in the MAC CE.
- Bitmap indicating which source serving cell requires cell switch (1 bit is configured for each serving cell or for each cell group ID corresponding to the source serving cell)
- At least one of fields indicating an ID of a target cell to be switched to, a DL/joint TCI state/beam, a UL TCI state/beam, and CAT, for each source serving cell for which cell switch is indicated

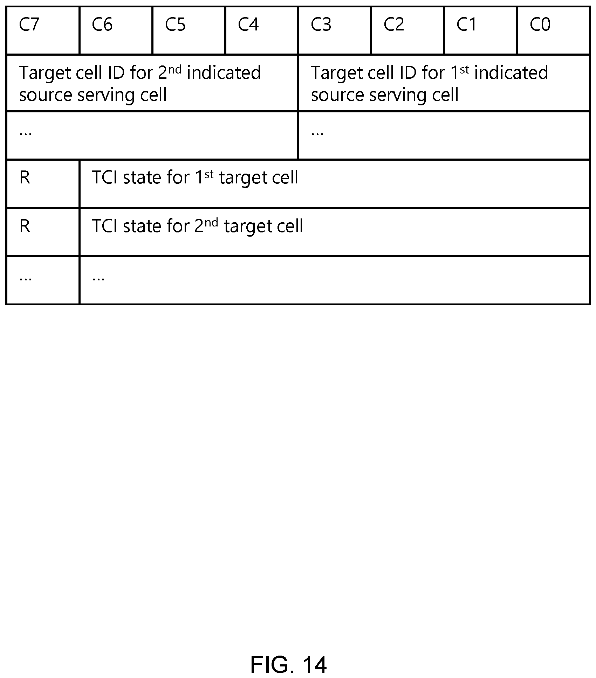

FIG. 14 is a diagram to show an example of a MAC CE of embodiment 3-2. C0 to C7 correspond to source serving cells. In each of C0 to C7, if "1" is indicated, this indicates that cell switch of the corresponding source serving cell is performed, and if "0" is indicated, this indicates that no cell switch of the corresponding source serving cell is performed.

In Target cell ID, an ID of a target cell corresponding to a source serving cell for which cell switch is performed (cell with "1" in C0 to C7) is configured. In TCI state, an ID of a TCI state corresponding to a source serving cell for which cell switch is performed (cell with "1" in C0 to C7) is configured. The size (number) of the Target cell ID fields and the size (number) of the TCI state field are determined (variable) according to the number of cells with "1" in C0 to C7.

The size of Target cell ID may be configured with a fixed size according to a specification or an RRC configuration. A target cell list (PCI list of target cells) may be configured by RRC. Then, cell ID of 4 bits in the MAC CE may indicate one from the list of target cells (for example, 16 cells) configured by the RRC.

### {Embodiment 3-3}

A field for cell switch indication may be added to an existing MAC CE. A MAC CE of the present embodiment may include at least one field of those described in <Serving Cell Change Indication> above, for example.

For the restriction of indication of SpCell switch, option 1 or 2 below may be employed.

### <<Option 1>>

No restriction may be provided for indication of SpCell switch. For example, one MAC CE may be able to indicate SpCell change and SCell change simultaneously.

### <<Option 2>>

When one MAC CE can indicate switching of a plurality of serving cells, the MAC CE can indicate switching of a plurality of Scells at one time but cannot indicate SpCell change and SCell change simultaneously. In other words, change of an SpCell and change of an Scell cannot be performed simultaneously.

For the cell application timing (CAT), option 1 or 2 below may be employed.

### <<Option 1>>

The cell application timing (CAT) may conform to cell application timing (CAT) in an existing MAC CE.

### <<Option 2>>

A certain time period after reception of a MAC CE or after ACK of a MAC CE, cell switch (also beam switch) is performed. For the cell application timing, the example of the second embodiment may be employed, for example. The MAC CE may be included in a new PDSCH obtained by toggling NDIs of the same HARQ process number.

Note that, in a case of applying embodiment 3-1, switch of a plurality of serving cells may be performed by one serving cell switching indication in combination of supplement D of the first embodiment.

### <Fourth Embodiment>

Cell switch (switch of a serving cell) by a UE may be triggered. The UE may transmit information indicating a request of cell switch in specific UL transmission, for example.

The UE may transmit a scheduling request (SR)/MAC CE to trigger cell switch. For example, similarly to beam failure recovery (BFR), a MAC CE may transmit information of a switch-target cell, and the SR may indicate only indication/purpose of the cell switch. Alternatively, only by a MAC CE, information of a cell for switch and indication of cell switch may be indicated. The UE may switch to a new cell a certain period after ACK of the MAC CE. For the certain time, CellAppTime_r18, BeamAppTime_r17, or the like may be used as described in the second/third embodiment. Alternatively, the UE may switch to a new cell at certain timing, based on indication from an NW (base station) using DCI/MAC in the first/third embodiment.

The MAC CE for cell switching transmitted from the UE may include similar fields to those of the MAC CE described in the third embodiment (for example, FIG. 14).

The UE can trigger (transmit information for triggering) a cell switch when a specific event is satisfied, based on a comparison between an L1-RSRP and L3-RSRP/RSRQ of a serving cell and an L1-RSRP and an L3-RSRP/RSRQ of a candidate cell, for example. For example, when the L1-RSRP and the L3-RSRP/RSRQ of the serving cell fall below certain thresholds indicated by higher layer signaling/physical layer signaling or fall below the L1-RSRP and the L3-RSRP/RSRQ of the candidate cell, cell switch may be triggered.

### <Fifth Embodiment>

A UE may receive a configuration/indication of a switching gap to be applied at the time of switch of a serving cell, by higher layer signaling/physical layer signaling, and execute a cell switch procedure, based on the configuration/indication. The UE restricts (for example, suspends) DL reception/UL transmission in a period of the switching gap. This is because the UE may take time for the switch of the serving cell (for example, for adjustment of DL/UL timing).

The switching gap may be applied to both DL/UL, only UL, or only DL. The switching gap may be determined by a specification, configured by higher layer signaling/physical layer signaling, or reported as a UE capability. The switching gap may be for each (Subcarrier Spacing (SCS)) or may be common to all the SCSs.

In the period of switching gap, the UE does not perform (estimate) reception/transmission of all signals/specific signal. When the UE is scheduled to receive/transmit a DL/UL signal, the UE is not requested to monitor a DL signal/perform UL transmission.

Start timing of the switching gap may be defined. For example, in a case of serving cell switching by TCI indication, Rel-17 beam application timing (BAT) may be applied. When a new mechanism is introduced, similar timing to beam application timing (BAT) needs to be defined to avoid such a situation of missing indication of DCI and being different in understanding between a UE and a gNB.

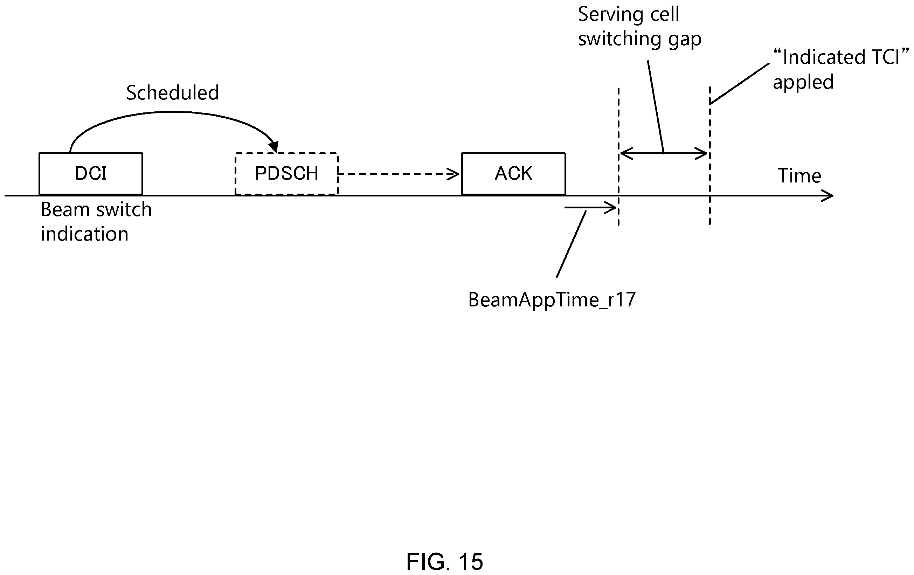

FIG. 15 is a diagram to show an example of a switching gap in the fifth embodiment. When a MAC CE indicates serving cell switch, switching gap is started a certain period after ACK transmission of the MAC CE, an indicated TCI state is applied at the end of the switching gap, and a serving cell is switched to a target cell. The certain period is 3 ms, for example, and may be based on a parameter (BeamAppTime_r17) indicating Rel-17 beam application timing or may be based on another parameter.

When switching of a serving cell is not performed, the switching gap is not applied (or configured with 0). A PDSCH may be scheduled but need not be scheduled (DL assignment may be included but need not be included in DCI).

According to the preset embodiment, by applying switching gap, UL/DL transmission in the period of cell switch can be stopped. Hence, even when cell switch is performed, transmission/reception can be performed normally.

### <Sixth Embodiment>

In a sixth embodiment, cell switching in carrier aggregation (CA) will be described. PCIs of different serving cells correspond to different TCI states/beams. To enable CA, the same TCI/beam (QCL typeD) may be used in all the BWPs/CCs of CA.

### {Embodiment 6-1}

For each of all the SpCell/Scells in a cell group, it is not permitted to use a different number of candidate cells (cells being candidates for a new serving cell). A UE assumes/expects that candidate cells of the same number correspond to each of cells including the SpCell/Scells. Each cell group of candidate cells may include the same number of candidate cells. When one candidate cell is indicated as a target cell (new serving cell), a group including the candidate cell is configured as a serving cell group.

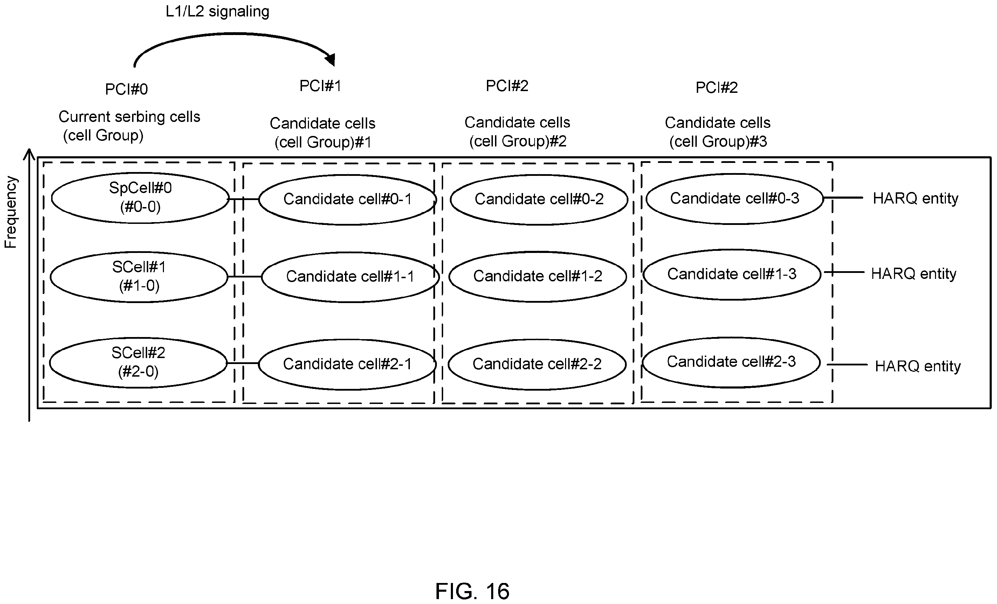

FIG. 16 shows an example of cell switch in embodiment 6-1. For the UE, candidate cell #1 (cell group #1) turns to be a new serving cell (serving cell group) by L1/L2 signaling (DCI/MAC CE). The candidate cell may be configured by RRC in advance or may be activated by a MAC CE. In the example in FIG. 16, the number of candidate cells for each SpCell/Scell is three.

PCIs #0 to #3 are new IDs for Rel-17 PCI indication and may be different from actual PCIs. In Rel. 17, seven additional PCIs may be configured at maximum by RRC. Each new ID of 3 bits (PCIs #0 to #3) may indicate one of a serving cell PCI and the seven additional PCIs. PCIs #0 to #3 may be similar indices to the regenerated indices described in (3-2) of <Serving Cell Change Indication> above.

A plurality of candidate cells corresponding to each serving cell may be configured as a new cell group for cell group switch by L1/L2 signaling. For example, new cell group #1 may include cells #0-1, #1-1, and #2-1. A MAC CE/DCI may indicate a "cell group ID" as a switch-target cell group.

In FIG. 16, when candidate cell #1 is indicated as a target cell, cell #0-1 turns to be an Spcell, cell #1-1 turns to be Scell #1, and cell #2-1 turns to be Scell #2. When candidate cell #2 is indicated as a target cell, cell #0-2 turns to be an Spcell, cell #1-2 turns to be Scell #1, and cell #2-2 turns to be Scell #2. When candidate cell #3 is indicated as a target cell, cell #0-3 turns to be an Spcell, cell #1-3 turns to be Scell #1, and cell #2-3 turns to be Scell #2.

### {Embodiment 6-2}

For each of cells including an SpCell/Scells in a cell group, it is permitted to use a different number of candidate cells (cells being candidates for a new serving cell). Each cell group of candidate cells may include a different number of candidate cells. When one candidate cell is indicated as a target cell (new serving cell), a group including the candidate cell is configured as a serving cell group. However, only the SpCell/Scell included in the group of the indicated candidate cell is activated, and other cells (cells not included in the group of the indicated candidate cell) are deactivated.

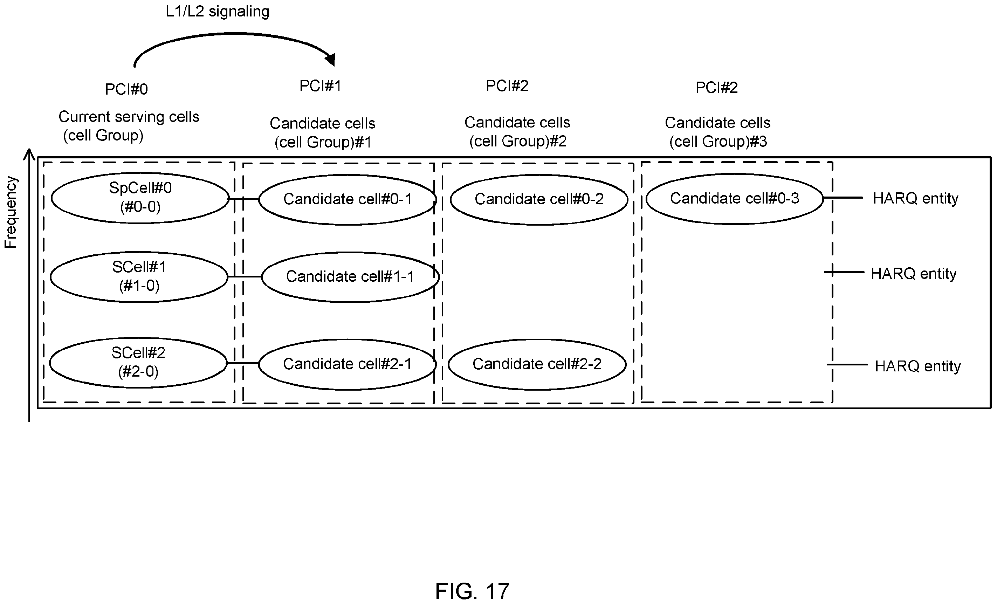

FIG. 17 shows an example of cell switch in embodiment 6-2. Description of similar respects to those of FIG. 16 is omitted. For the UE, candidate cell #1 (cell group #1) turns to be a new serving cell (serving cell group) by L1/L2 signaling (DCI/MAC CE).

When candidate cell #1 is indicated, cell #0-1 turns to be an Spcell, cell #1-1 turns to be Scell #1, and cell #2-1 turns to be Scell #2. When candidate cell #2 is indicated, cell #0-2 turns to be an Spcell, cell #2-2 turns to be Scell #2, and Scell #1 (cell #1-2) is deactivated. Alternatively, cell #2-2 may turn to be Scell #1, and Scell #2 (cell #1-2) may be deactivated. When candidate cell #3 is indicated, cell #0-3 turns to be an Spcell, and all Sells are deactivated.

When there is no SpCell corresponding to the candidate cell, the cell to which the lowest (or highest) CC ID/PCI of Scells corresponds may turn to be an SpCell. Alternatively, an SpCell may always be included in candidate cells.

### <Supplements>

At least one of the above described embodiments may be applied only to a UE that has reported a specific UE capability or that supports the specific UE capability.

The specific UE capability may indicate at least one of the following.
- Supporting of specific processing/operation/control/information about at least one example in the above embodiments
- Supporting of simultaneous switching of a plurality of serving cells
- The maximum number of serving cells possible to switch at one time
- Whether a plurality of serving cells are limited to Scells
- Supporting of a cell lit for simultaneous serving cell switch
- The maximum number of cell lists
- Cell application time
- Whether CAT for SpCell switch and CAT for Scell switch are common or separate
- Whether CAT for single-cell switch and CAT for simultaneous multi-cell switch are common or separate
- The maximum number of candidate cells to be configured/maintained for one serving cell In addition, whether the maximum number is common or separate for an SpCell and an SCell
- The maximum number of candidate serving cells of dynamic cell switch to be configured The maximum number may be for each cell group/MCG/SCG/UE/band.
- The maximum number of candidate cells to be configured/maintained for all serving cells
- Supporting of cell switch by trigger by the UE
- Event supported as trigger of cell switch

The specific UE capability may be capability applied over all frequencies (in common irrespective of frequency), may be capability for each frequency (for example, one or a combination of cell, band, band combination, BWP, component carrier, and the like), may be capability for each frequency range (for example, Frequency Range 1 (FR1), FR2, FR3, FR4, FR5, FR2-1, and FR2-2), may be capability for each subcarrier spacing (SCS), or may be capability for each Feature Set (FS) or Feature Set Per Componentcarrier (FSPC).

The specific UE capability may be capability applied over all duplex schemes (in common irrespective of duplex scheme) or a capability for each duplex scheme (for example, time division duplex (TDD) or frequency division duplex (FDD)).

At least one of the above-described embodiments may be applied to a case where a UE is configured with specific information related to the embodiment by higher layer signaling. For example, the specific information may be any RRC parameter for a specific release (for example, Rel. 17/18).

When the UE does not support at least one of the specific UE capabilities above or is not configured with the specific information above, Rel-15/16 operation may be performed, for example.

### (Supplementary Note A)

Regarding one embodiment of the present disclosure, the following supplementary notes of the invention will be given.

### {Supplementary Note 1}

A terminal including:
a receiving section that receives downlink control information (DCI) including a field indicating switch of a serving cell; and
a control section that switches a cell in which transmission/reception is performed, based on the DCI.

### {Supplementary Note 2}

The terminal according to supplementary note 1, wherein a serving cell before the switch is a cell that receives the DCI or a cell indicated by a carrier indicator of the DCI and a serving cell after the switch is related to a transmission configuration indication (TCI) state indicated by the DCI.

### {Supplementary Note 3}

The terminal according to supplementary note 1 or 2, wherein the DCI simultaneously indicates switch of a plurality of serving cells.

### {Supplementary Note 4}

The terminal according to any one of supplementary notes 1 to 3, wherein, when switch of a serving cell of a secondary cell is indicated by the DCI, a cell to be a serving cell turns to be a special cell, and a special cell before switch turns to be a secondary cell.

### (Supplementary Note B)

Regarding one embodiment of the present disclosure, the following supplementary notes of the invention will be given.

### {Supplementary Note 1}

A terminal including:
a receiving section that receives downlink control information (DCI) including a field indicating a transmission configuration indication (TCI) state and a field indicating switch of a serving cell and receives a configuration of cell application timing; and
a control section that applies the TCI state after switch at timing based on the configuration.

### {Supplementary Note 2}

The terminal according to supplementary note 1, further comprising
a transmitting section that transmits capability information related to cell application timing, wherein
the receiving section receives a parameter indicating cell application timing corresponding to the UE capability, by higher layer signaling, and
the control section determines application timing of the TCI state, based on the parameter.

### {Supplementary Note 3}

The terminal according to supplementary note 1 or 2, wherein
the receiving section receives a parameter indicating beam application timing, by higher layer signaling, and
the control section determines application timing of the TCI state, based on a maximum value of cell application timing and beam application timing.

### {Supplementary Note 4}

The terminal according to any one of supplementary notes 1 to 3, wherein
the receiving section receives a Medium Access Control Control Element (MAC CE) including at least one of an ID of a serving cell after switch, a TCI state related to the cell, and an ID of a serving cell before switch, and
the control section carries out cell switch, based on information included in the MAC CE.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

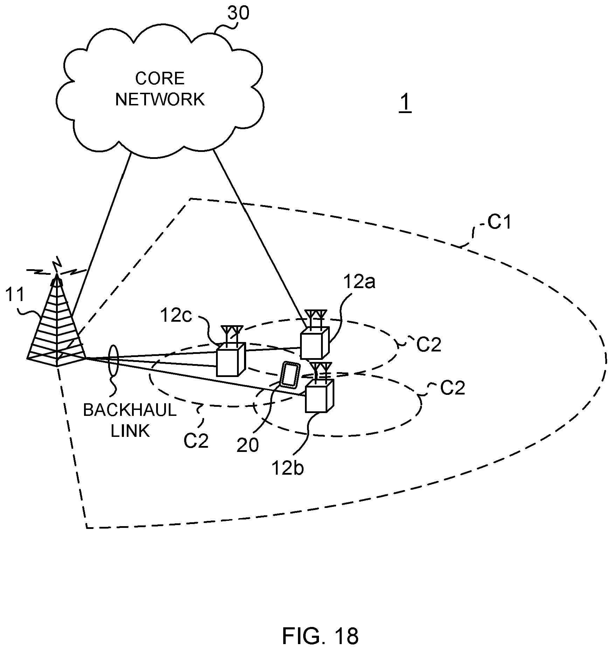

FIG. 18 is a diagram to show an example of a schematic structure of the radio communication system according to one embodiment. The radio communication system 1 (which may be simply referred to as a system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF) such as a User Plane Function (UPF), an Access and Mobility management Function (AMF), a Session Management Function (SMF), Unified Data Management (UDM), an ApplicationFunction (AF), a Data Network (DN), a Location Management Function (LMF), and operation, administration, and maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cellspecific reference signal (CRS), a channel state informationreference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

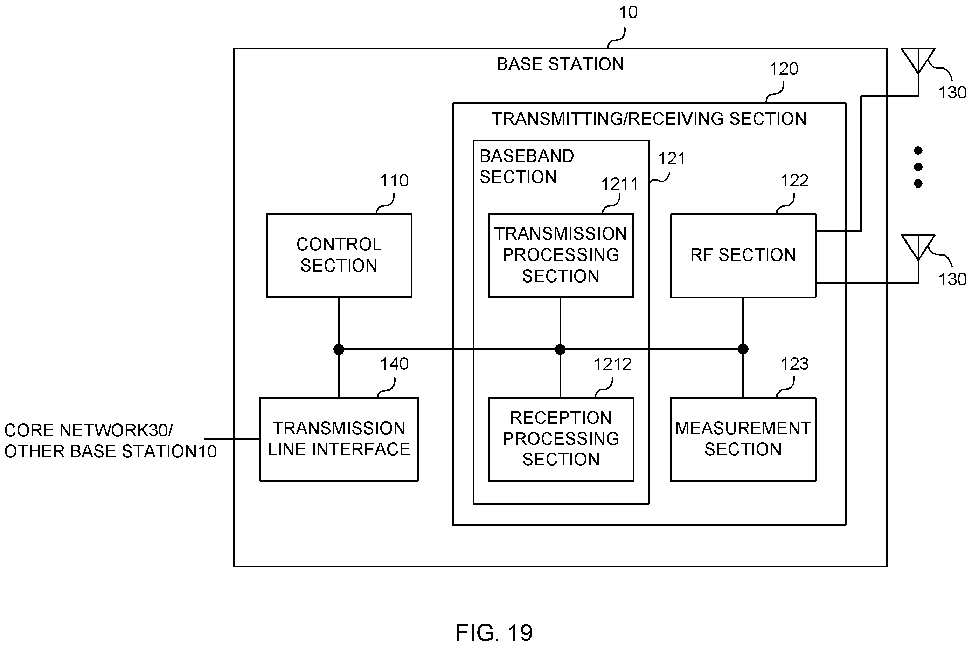

FIG. 19 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analogdigital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may transmit/receive (perform backhaul signaling of) a signal with an apparatus (for example, a network node providing NFs) included in the core network 30 or other base stations 10, and so on, and may acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit downlink control information (DCI) including a field indicating switch of a serving cell. The control section 110 may control transmission/reception with a terminal that has switched a cell in which transmission/reception is performed, based on the DCI.

The transmitting/receiving section 120 may transmit downlink control information (DCI) including a field indicating a transmission configuration indication (TCI) state and a field indicating switch of a serving cell and transmit a configuration of cell application timing. The control section 110 may apply the TCI state after switch at timing based on the configuration.

The transmitting/receiving section 120 may transmit a configuration of a switching gap to be applied at the time of switch of a serving cell. The control section 110 may restrict at least one of downlink transmission and uplink reception, in a period of the switching gap.

### (User Terminal)

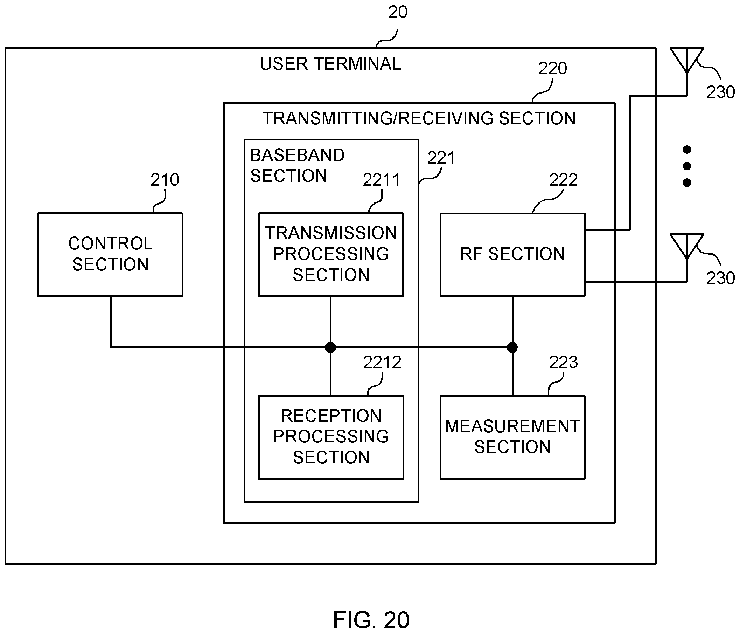

FIG. 20 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive downlink control information (DCI) including a field indicating switch of a serving cell. The control section 210 may switch a cell in which transmission/reception is performed, based on the DCI.

A serving cell before the switch may be a cell in which the DCI is received or a cell indicated by a carrier indicator of the DCI, and a serving cell after the switch may be a cell that is related to a transmission configuration indication (TCI) state indicated by the DCI.

The DCI may simultaneously indicate switch of a plurality of serving cells.

When switch of a serving cell of a secondary cell is indicated by the DCI, a cell to be a serving cell may turn to be a special cell, and a special cell before switch may turn to be a secondary cell.

The transmitting/receiving section 220 may receive downlink control information (DCI) including a field indicating a transmission configuration indication (TCI) state and a field indicating switch of a serving cell and receive a configuration of cell application timing. The control section 210 may apply the TCI state after switch at timing based on the configuration.

The transmitting/receiving section 220 may transmit capability information related to cell application timing. The transmitting/receiving section 220 may receive a parameter indicating cell application timing corresponding to the UE capability, by higher layer signaling. The control section 210 may determine application timing of the TCI state, based on the parameter.

The transmitting/receiving section 220 may receive a parameter indicating beam application timing by higher layer signaling. The control section 210 may determine the application timing of a TCI state, based on the maximum value of the cell application timing and the beam application timing.

The transmitting/receiving section 220 may receive a Medium Access Control Control Element (MAC CE) including at least one of an ID of a serving cell after switch, a TCI state related to the cell, and an ID of a serving cell before switch. The control section 210 may carry out cell switch, based on information included in the MAC CE.

The transmitting/receiving section 220 may receive a configuration of a switching gap to be applied at the time of switch of a serving cell. The control section 210 may restrict at least one of downlink reception and uplink transmission, in a period of the switching gap.

The control section 210 may assume that candidate cells to be a new serving cell correspond to each cell, the numbers of the candidate cells being the same. When one candidate cell is indicated as a new serving cell, a group including the one candidate cell may be configured as a serving cell group.

When candidate cells to be a new serving cell correspond to each cell, the numbers of the candidate cells being different, and one candidate cell is indicated as a new serving cell, a group including the one candidate cell may be configured as a serving cell group, and a cell not included in the group including the one candidate cell may be deactivated.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

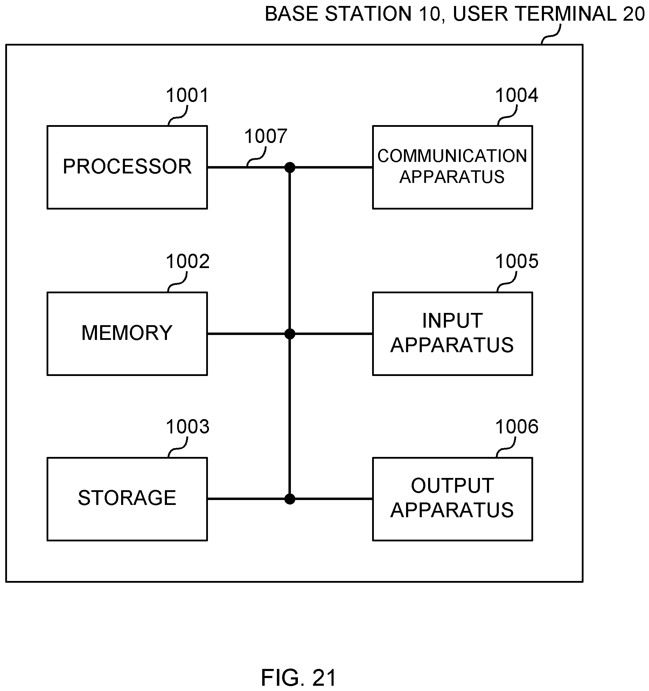

For example, a base station, a user terminal, and so on according to one embodiment of the present disclosure may function as a computer that executes the processes of the radio communication method of the present disclosure. FIG. 21 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) may be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP."

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and may be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, a case that a base station transmits information to a terminal may be interchangeably interpreted as a case that the base station indicates, for the terminal, control/operation based on the information.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

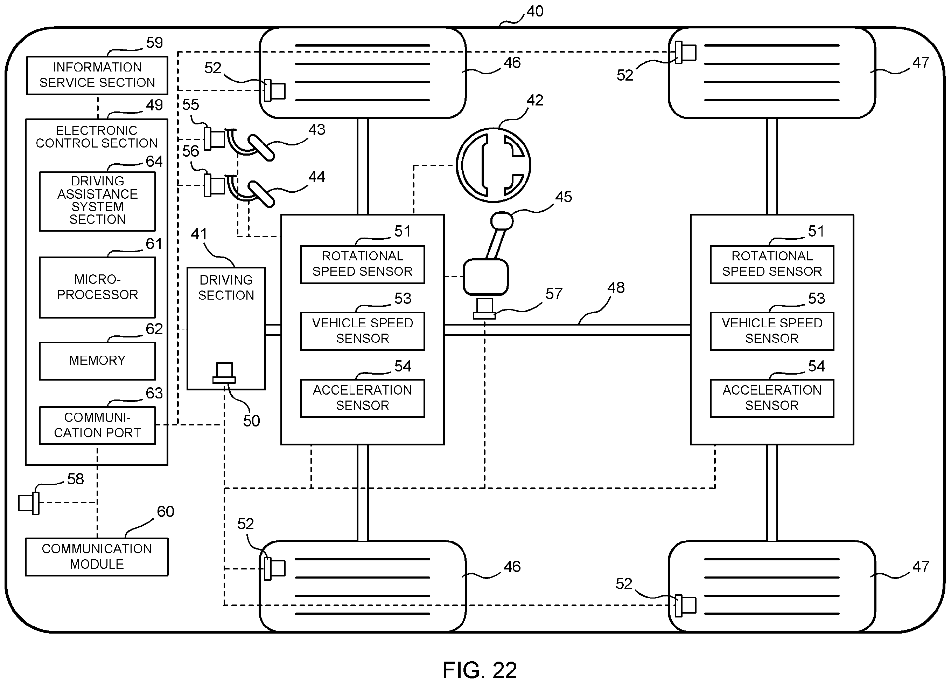

FIG. 22 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B are each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

In the present disclosure, "equal to or smaller than," "smaller than," "equal to or larger than," "larger than," "equal to," and the like may be interchangeably interpreted. In the present disclosure, words such as "good," "poor," "large," "small," "high," "low," "early," "late," "wide," "narrow," and the like may be interchangeably interpreted irrespective of positive degree, comparative degree, and superlative degree. In the present disclosure, expressions obtained by adding "i-th" (i is any integer) to words such as "good," "poor," "large," "small," "high," "low," "early," "late," "wide," "narrow," and the like may be interchangeably interpreted irrespective of positive degree, comparative degree, and superlative degree (for example, "highest" may be interpreted as "i-th highest," and vice versa).

In the present disclosure, "of," "for," "regarding," "related to," "associated with," and the like may be interchangeably interpreted.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives downlink control information (DCI) including a field indicating a transmission configuration indication (TCI) state and a field indicating switch of a serving cell and receives a configuration of cell application timing; and
a control section that applies the TCI state after switch at timing based on the configuration.

2. The terminal according to claim 1, further comprising
a transmitting section that transmits capability information related to cell application timing, wherein
the receiving section receives a parameter indicating cell application timing corresponding to the UE capability, by higher layer signaling, and
the control section determines application timing of the TCI state, based on the parameter.

3. The terminal according to claim 1, wherein
the receiving section receives a parameter indicating beam application timing, by higher layer signaling, and
the control section determines application timing of the TCI state, based on a maximum value of cell application timing and beam application timing.

4. The terminal according to claim 1, wherein
the receiving section receives a Medium Access Control Control Element (MAC CE) including at least one of an ID of a serving cell after switch, a TCI state related to the cell, and an ID of a serving cell before switch, and
the control section carries out cell switch, based on information included in the MAC CE.

5. A radio communication method for a terminal, the radio communication method comprising:
receiving downlink control information (DCI) including a field indicating a transmission configuration indication (TCI) state and a field indicating switch of a serving cell and receiving a configuration of cell application timing; and
applying the TCI state after switch at timing based on the configuration.

6. A base station comprising:
a transmitting section that transmits downlink control information (DCI) including a field indicating a transmission configuration indication (TCI) state and a field indicating switch of a serving cell and transmits a configuration of cell application timing; and
a control section that applies the TCI state after switch at timing based on the configuration.
